Europäisches Patentamt

European Patent Office

Office européen des brevets

(11) Veröffentlichungsnummer: **0 089 500**
**B1**

(12) **EUROPÄISCHE PATENTSCHRIFT**

(45) Veröffentlichungstag der Patentschrift:
06.11.85

(21) Anmeldenummer: 83101724.9

(22) Anmeldetag: 23.02.83

(51) Int. Cl.⁴: **B 60 H 1/00**

(54) Gehäuse für eine Heizungs- oder Klimaanlage für Kraftfahrzeuge.

(30) Priorität: **19.03.82 DE 3210019**

(43) Veröffentlichungstag der Anmeldung:
28.09.83 Patentblatt 83/39

(45) Bekanntmachung des Hinweises auf die Patenterteilung:
06.11.85 Patentblatt 85/45

(84) Benannte Vertragsstaaten:
**BE DE FR GB IT**

(56) Entgegenhaltungen:
DE - A - 2 437 232
DE - A - 3 107 324
FR - A - 1 500 286
FR - A - 1 510 176
FR - A - 1 534 866
FR - A - 2 082 269
FR - A - 2 362 018
FR - A - 2 450 169

(73) Patentinhaber: Süddeutsche Kühlerfabrik Julius Fr. Behr GmbH & Co. KG., Mauserstrasse 3,
D-7000 Stuttgart 30 (DE)
Patentinhaber: FORD-WERKE AKTIENGESELLSCHAFT,
Ottoplatz 2 Postfach 21 03 69, D-5000 Köln 21 (DE)

(72) Erfinder: Dietzsch, Kurt, Dipl.-Ing., Göppinger Strasse 65, D-7250 Leonberg-Eltingen (DE)
Erfinder: Oess, Hans-Dieter, Rossbachstrasse 25,
D-7000 Stuttgart 31 (DE)
Erfinder: Kniele, Wolfgang, August-Lämmle-Weg 2,
D-7257 Ditzingen 4 (DE)
Erfinder: Zander, Joachim, Rehbergweg 19,
D-5020 Frechen (DE)
Erfinder: Jeske, Gustav, Bruchstrasse 30,
D-5024 Pulheim (DE)

(74) Vertreter: Wilhelm, Hans-Herbert, Dr.-Ing., Wilhelm & Dauster Patentanwälte Hospitalstrasse 8,
D-7000 Stuttgart 1 (DE)

EP 0 089 500 B1

## Beschreibung

Die Erfindung betrifft ein Gehäuse für eine Heizungs- oder Klimaanlage für Kraftfahrzeuge, das im Fussbereich unterhalb der Windschutzscheibe in Fahrzeugmitte angeordnet ist und mit steuerbaren Auslässen für die Verteilung von Frisch- oder Heizungsluft zu den im Bereich der Windschutzscheibe bzw. im Fussbereich angeordneten Ausströmdüsen versehen ist, aus zwei an einer in Fahrzeuglängsrichtung verlaufenden Trennebene zusammengefügten Gehäuseteilen besteht und mit einer quer zur Trennebene verlaufenden Fussauslassdüse versehen ist, die als getrenntes Teil an dem Gehäuse angebracht ist.

Es sind Heizungs- bzw. Klimaanlagen für Kraftfahrzeuge bekannt (DE-C-24 37 232), bei denen ein, in der Regel aus Kunststoff hergestelltes Gehäuse im Bereich des Mitteltunnels angeordnet ist, von dem aus die Frisch- oder Heizungsluftführung wahlweise nach oben in den Bereich der Windschutzscheibe oder zu den Seitenscheiben, aber auch in den Fussraum vor dem Fahrer und Beifahrer führt. Bekannte Gehäuse dieser Art sind zweiteilig ausgeführt und in einer senkrechten Trennebene zusammengefügt, wobei vor dem Zusammenfügen jeweils wahlweise die für den entsprechenden Fahrzeugtyp notwendigen oder gewünschten Wärmetauscheraggregate sowie Steuerklappen eingesetzt werden. Nachteilig ist, dass wegen der relativ komplizierten Formgebung der Herstellungsaufwand unter Umständen sehr gross ist. Nachteilig ist auch, dass bei Verwendung von teilweise seitlich geschlossenen Fussauslassdüsen eine einteilige Herstellung von Fussauslassdüse mit Gehäuseteilen nicht mehr möglich war, weil Hinterschneidungen am Werkzeug auftreten konnten. Man hat daher auch schon Heizungsgehäuse vorgeschlagen, bei denen die Fussauslassdüse getrennt und nachträglich an das zusammengesetzte Gehäuse angebracht werden musste, was teilweise durch nachträgliches Einklipsen von mehreren Düsen in entsprechende Öffnungen geschah und zum Teil auch noch mit gesonderten Montagevorgängen, wie beispielsweise Einkleben, verbunden war. Für die im Kraftfahrzeugbau notwendige Massenherstellung ist diese Art der Montage zu aufwendig.

Der vorliegenden Erfindung liegt daher die Aufgabe zugrunde, ein Gehäuse der eingangs genannten Art so auszubilden, dass keine nachträglichen Montagearbeiten notwendig sind. Die Erfindung besteht darin, dass die Fussauslassdüse als ein einziges, sich über beide Gehäuseteile erstreckendes Bauteil ausgebildet ist und von der Trennebene her jeweils formschlüssig auf Anschlussführungen der in der Trennebene untereinander einrastbaren Gehäuseteile aufgeschoben ist. Diese Ausführung weist den grossen Vorteil auf, dass die Fussauslassdüse schon bei der Montage des Gehäuses ohne Zuhilfenahme zusätzlicher Werkzeuge mit in das Gehäuse integriert werden kann, so dass mit dem Zusammenfügen der beiden Gehäuseteile auch die Fussauslassdüse fest und sicher montiert ist. Der Erfindung liegt dabei die Idee zugrunde, dass der ohnehin zum Zusammenfügen der Gehäuseteile untereinander notwendige Vorgang des Zusammenschiebens der Gehäuseteile gleichzeitig auch zum Aufschieben dieser Gehäuseteile auf ein drittes Bauteil, nämlich die Fussauslassdüse, ausgenutzt werden kann, wenn entsprechende senkrecht zur Trennebene, also in Richtung des Schiebevorganges verlaufende Führungen vorhanden sind. Durch geeignete Ausbildung der Endanschläge an den Gehäuseteilen wird nach dem Zusammenrasten der Gehäuseteile auch die Fussauslassdüse in ihrer Lage fixiert.

Diese Anschläge an den Gehäuseteilen werden vorzugsweise an dem von der Trennebene abgewandten Ende vorgesehen und es lässt sich auf diese Weise in diesen Endbereichen auch eine Ausführung mit geschlossenen oder teilweise mit Ausströmöffnungen versehenen Fussauslassdüse erreichen. Aufgrund der gewählten Art der Montage kann auch die Formgebung der Fussauslassdüse unabhängig von einem etwa notwendigen Ausformvorgang für die Gehäusehälften vorgenommen werden, was bedeutet, dass der Querschnitt und die Aussenform der Fussauslassdüse unabhängig je nach den jeweiligen Gegebenheiten gewählt werden kann. Es ist zum Beispiel vorteilhaft und möglich, den freien Querschnitt innerhalb der Fussauslassdüse zu den aussenliegenden Ausströmöffnungen immer grösser werden zu lassen, so dass sich eine Art Diffusorwirkung ergibt. Auf der anderen Seite kann im Bereich der Trennebene, d.h. in der Mitte des Gehäuses, eine vom Fahrzeugboden weg gewölbte Ausführung erreicht werden, die bei Fahrzeugen mit Mitteltunnel den Vorteil aufweist, dass sich die Fussauslassdüse sattelartig über den Bereich des Tunnels erstrecken kann, somit der notwendige Einbauraum für das Gehäuse der Heizung und Lüftung geringer wird, ohne dass jedoch die Wirksamkeit der erwünschten Luftströmung im Fussbodenbereich beeinträchtigt wird.

Vorteilhaft ist es, wenn an entsprechenden Anschlusswänden der Gehäuseteile Einschubleisten vorgesehen sind, die etwa parallel zueinander verlaufen und die in korrespondierende Einschubnuten an der Oberkante der Fussauslassdüse eingreifen. Die Einschubleisten der Gehäuseteile können leicht konisch sich zur Trennebene hin verjüngen, was zum einen den Vorteil mit sich bringt, dass bei der Herstellung der Gehäusehälften der Ausformvorgang nicht behindert wird, zum anderen aber auch für das spätere Einführen dieser Leisten in die Nuten ein vorzeitiges Klemmen nicht zu befürchtet werden bräucht. Die Einschubnuten an der Fussauslassdüse können zusätzlich trichterförmige Erweiterungen an der Einschiebseite aufweisen, so dass die an sich schon einfache Montage von Gehäuseteilen mit der Fussauslassdüse noch weiter erleichtert wird. Die Gehäuseteile können untereinander durch Einrastverbindungen gehalten werden, so dass zur Montage des neuen Gehäuses keinerlei Werkzeuge notwendig sind.

Die Erfindung ist anhand eines Ausführungsbeispieles in den Zeichnungen dargestellt und in der nachfolgenden Beschreibung erläutert. Es zeigen:

Fig. 1 die schematische Darstellung der Einbaulage eines neuen Gehäuses für eine Heizungs- oder Klimaanlage in einen Personenkraftwagen,

Fig. 2 die Ansicht auf eine von zwei Gehäusehälften eines Gehäuses nach der Erfindung von der Trennebene aus gesehen mit angesetzter und geschnittener Auslassdüse,

Fig. 3 die Draufsicht auf die Gehäusehälfte der Fig. 2 in Richtung des Pfeiles III gesehen,

Fig. 4 die Frontansicht der Gehäusehälfte der Fig. 2 und 3 in Richtung des Pfeiles IV der Fig. 2, jedoch ohne die angesetzte Fussauslassdüse aber mit der zugeordneten auf die Fussauslassdüse aufgeschobenen zweiten Gehäusehälfte im noch nicht fertig montierten Zustand,

Fig. 5 die Ansicht auf den Anschlussbereich für die Fussauslassdüse an der Gehäusehälfte der Fig. 2 und 3 in Richtung des Pfeiles V der Fig. 4 gesehen,

Fig. 6 die Draufsicht auf das Aufschiebteil der Fussauslassdüse in Richtung des Pfeiles VI der Fig. 7 gesehen,

Fig. 7 die Stirnansicht des Aufschiebteiles der Fussauslassdüse in Richtung des Pfeiles VII der Fig. 6 gesehen und

Fig. 8 die Ansicht der Fussauslassdüse in Richtung des Pfeiles VIII der Fig. 6 gesehen.

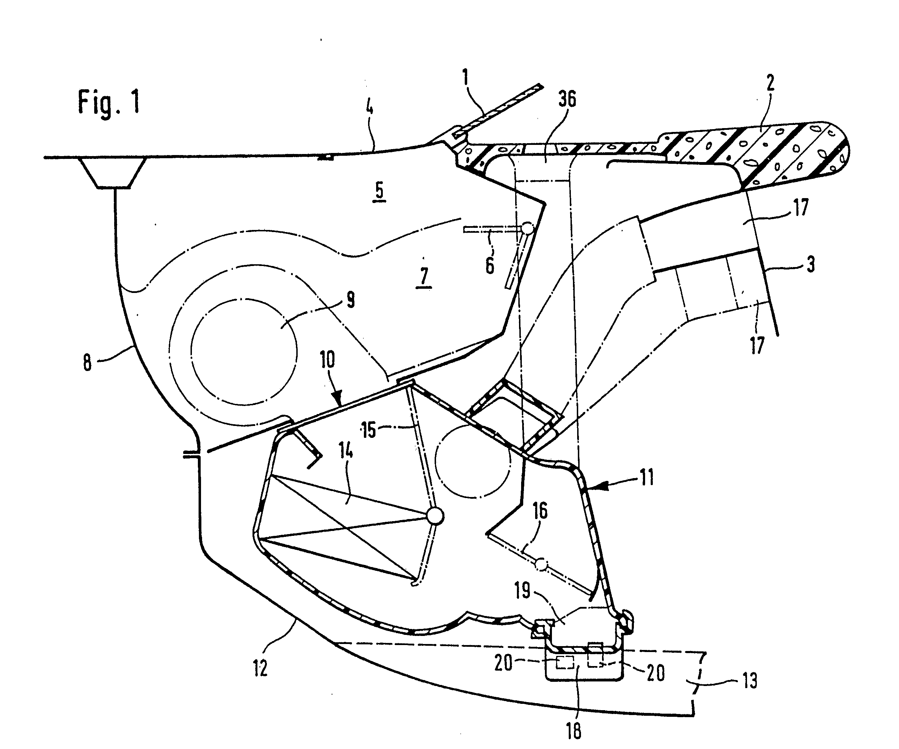

In der Fig. 1 ist schematisch ein Querschnitt durch die Längsmitte eines Personenkraftwagens und durch den vorderen Bereich des Fahrgastraumes etwa unterhalb der Windschutzscheibe gezeigt. Es ist die unterhalb der Windschutzscheibe 1 liegende Verkleidung 2 des Armaturenbrettes zu erkennen und das Instrumentenblech 3, wobei unterhalb des vor der Windschutzscheibe liegenden Windlaufbleches 4 eine Luftkammer 5 sitzt, die über eine einstellbare Klappe 6 mit einer weiteren Luftkammer 7 in Verbindung gebracht werden kann, die ihrerseits zu einem hinter der Motortrennwand 8 sitzenden Gebläse 9 und von dort aus über eine Öffnung 10 mit dem Gehäuse 11 einer Heizungs- oder Klimaanlage für das Fahrzeug in Verbindung gebracht werden kann. Dieses Gehäuse 11 liegt über dem Bodenblech 12, beispielsweise im Bereich des gestrichelt angedeuteten Wellentunnels 13 und enthält eine den Zugang zu einem Wärmetauscher 14 freigebende oder abschliessende Steuerklappe 15, durch die entweder Frischluft oder aufgeheizte Luft in das Gehäuseinnere hereingeführt und von dort je nach Stellung der weiteren Steuerklappe 16 zu den Belüftungsdüsen 17 im Bereich des Armaturenbrettes oder im Bereich der Seitenfenster und zu einer Fussausströmdüse 18 oder zu den Defrosterdüsen 36 geführt werden kann. Die Fussausströmdüse 18 ist, wie noch anhand der weiteren Figuren erläutert werden wird, im wesentlichen aus einem quer zur Längsmittelebene des Fahrzeuges verlaufenden Strömungskanal 19 gebildet, die an seinen beidseitigen Enden in die verschiedenartig gestaltbaren Luftaustrittsöffnungen 20 übergeht. Diese Ausgestaltung ist deshalb getroffen, damit Warmluft oder Frischluft auch in den Fussbereich von Fahrer und Beifahrer gelangen kann.

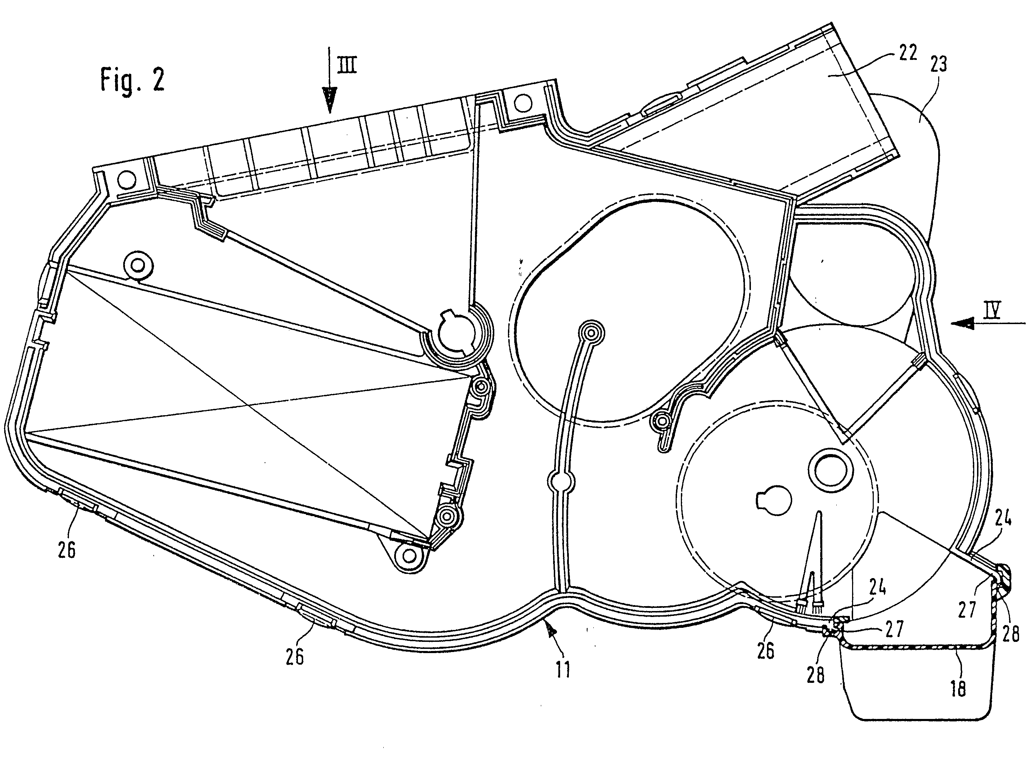

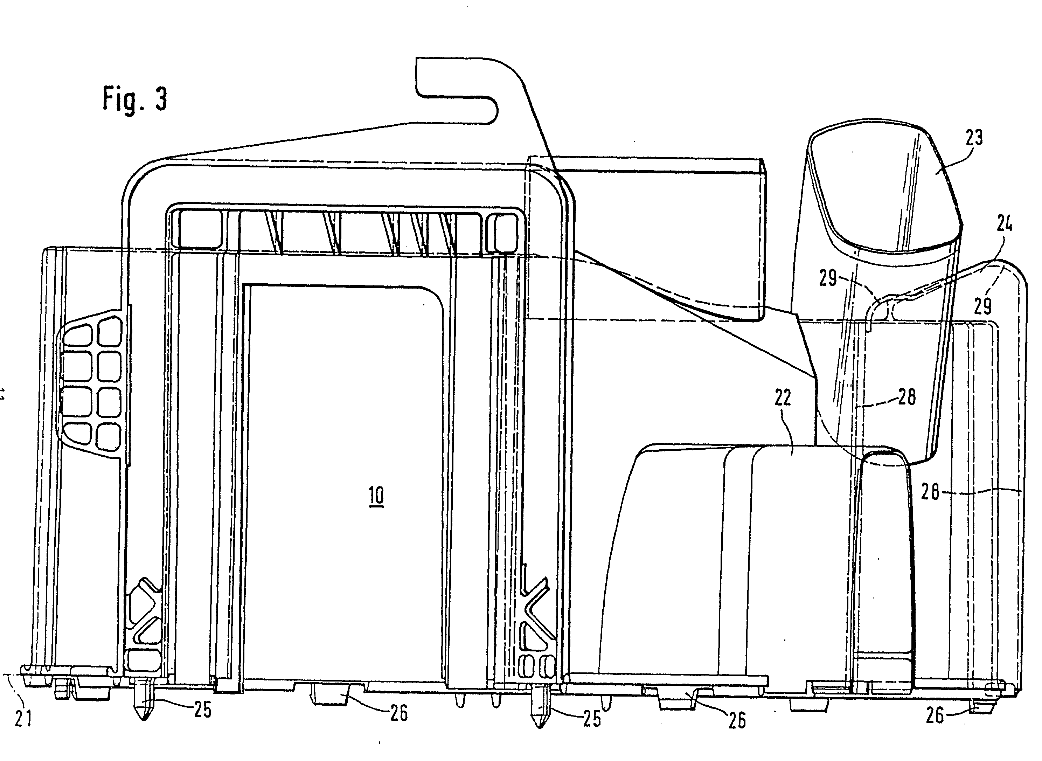

Aus den Fig. 2 und 3 und 4 wird ersichtlich, dass das Gehäuse 11 aus zwei Gehäusehälften besteht, die in einer vorzugsweise in der Längsmittelebene des Fahrzeuges angeordneten Trennebene 21 zusammengefügt sind. Die beiden Gehäusehälften sind dabei jeweils mit der Hälfte der Eintrittsöffnung 10, mit dem halben Anschlussstutzen 22 sowie mit je einem nach der Seite weisenden Anschlussstutzen 23 versehen, der zu den Seitenausströmdüsen führt, sowie mit nach unten weisenden Anschlusswänden 24, an die der untere Teil der Fussauslassdüse 18 angesetzt ist. In der Trennebene sind die Gehäusehälften jeweils mit Passstiften 25 bzw. mit korrespondierenden Öffnungen und mit Einrasthaken 26 versehen, die beim Zusammenfügen der beiden Gehäusehälften über entsprechende Gegenhaken schnappen und so den Zusammenhalt der senkrecht zur Trennebene 21 zusammenschiebbaren Gehäusehälften sichert. Beide Gehäusehälften sind in an sich bekannter Weise aus Kunststoffmaterial gefertigt, das genügend Elastizität für eine solche Montage aufweist.

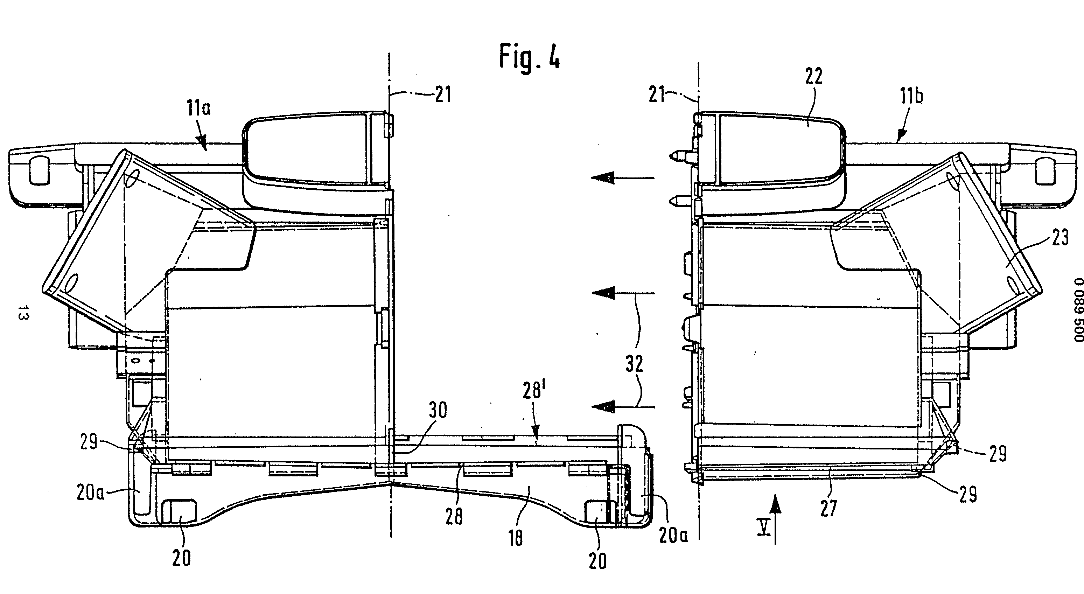

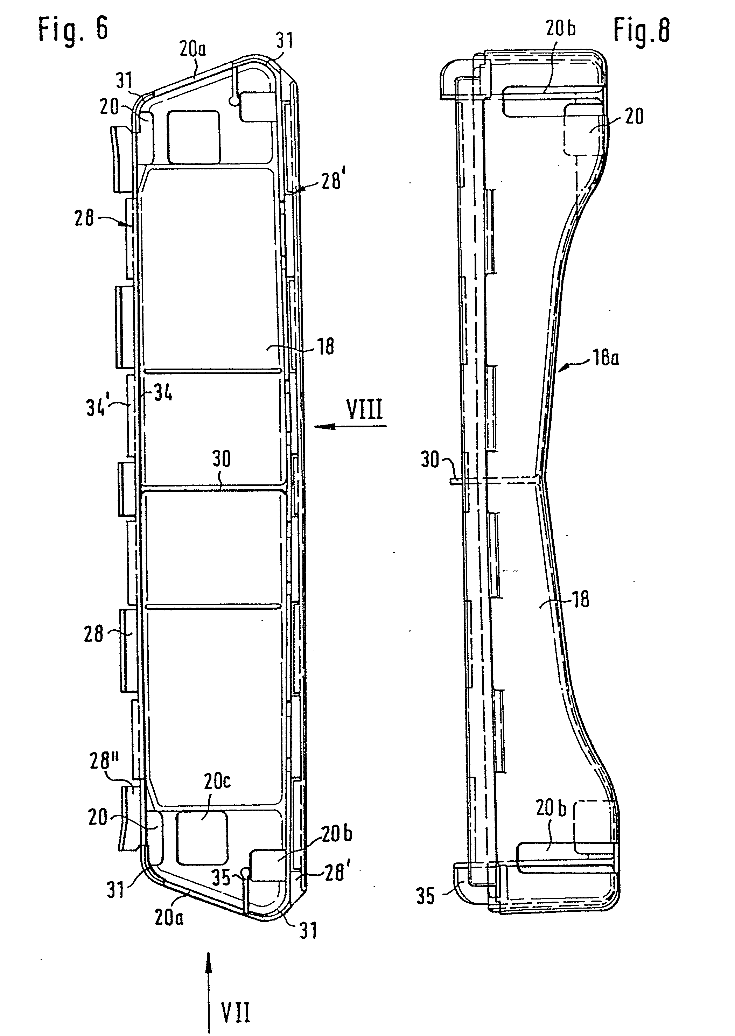

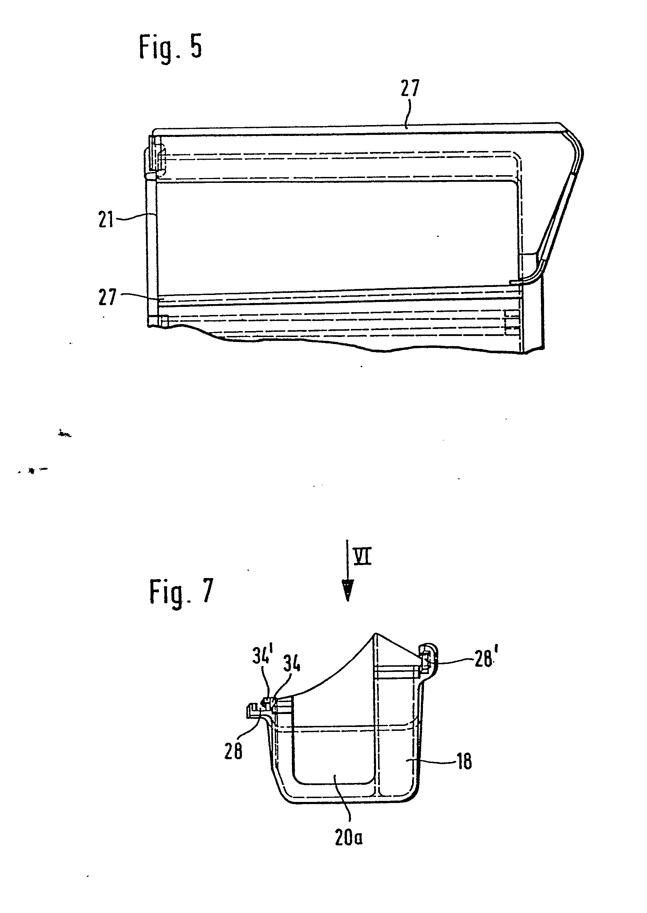

Wie aus der Fig. 2 ersichtlich ist, sind an den unteren Enden der Anschlusswände 24 Einschubleisten 27 angeordnet, die in entsprechende Einschubnuten 28 an den Oberkanten der Fussauslassdüse 18 formschlüssig eingreifen, wie noch erläutert werden wird. Die Fussauslassdüse 18 selbst weist, wie Fig. 4 oder 8 zeigen, eine leicht gebogene Aussenkontur auf, deren höchster Punkt nach der Montage des gesamten Gehäuses in der Trennebene 21 liegt. Die Fussauslassdüse 18 kann sich daher sattelartig über den Wellentunnel eines Fahrzeuges erstrecken und reicht dann mit den beiden an dem teilweise geschlossenen Ende der Fussauslassdüse 18 liegenden Luftaustrittsöffnungen 20, 20a in den Fussbereich vor dem Fahrer bzw. vor dem Beifahrer. Die beiden Gehäusehälften 11a bzw. 11b weisen, wie auch aus Fig. 5 hervorgeht, etwa parallel zueinander verlaufende und senkrecht zu der Trennebene 21 stehende Einschubleisten 27 auf, die sich zu der Trennebene 21 hin leicht konisch verjüngen. Das ist einmal deshalb vorteilhaft, weil damit der Ausformvorgang der Gehäusehälfte 11a bzw. 11b nach der Formgebung sehr einfach wird, und zum anderen deshalb, weil sich dann das Einschieben dieser Leisten 27 in die korrespondierenden Nuten 28 leichter bewerkstelligen lässt. An dem von der Trennebene 21 abgewandten Ende der Einschubleisten 27 sind gebogene Anschlagwände 29 vorgesehen, die dafür sorgen, wie aus Fig. 4 linke Hälfte ersichtlich ist, dass sich jede Gehäusehälfte 11a nur jeweils bis zu der in der Mitte der Ausströmdüse 18 vorgesehenen und mit dieser einstückig verbundenen Trennwand 30 aufschieben lässt, weil dann nämlich die Anschlagwände 29 von aussen an den entsprechenden Anschlagwandteilen 31 (Fig. 6) der Fussausströmdüsenoberkanten anliegen. Wird daher gemäss Fig. 4 auch noch die Gehäusehälfte 11b in Richtung der Pfeile 32 auf die Ausströmdüse 18 aufgeschoben, wobei die Einschubleisten 27 sowohl in die höher liegende Nut 28' als auch in die tiefer liegende Nut 28 der Fussausströmdüse hereingeführt werden, und werden die Gehäusehälften 11a und 11b dann in der Trennebene 21 untereinander in der vorher angedeuteten Weise fest verbunden, dann ist gleichzeitig damit auch die Fussausströmdüse 18 formschlüssig und in ihrer Lage gesichert mit diesen beiden Gehäuseteilen 11a und 11b verbunden. Durch die Erfindung wird somit ein Gehäuse für eine Heizungs- oder Klimaanlage geschaffen, das in sehr einfacher Weise nur aus drei Teilen besteht, die sich aber mit einem einzigen Montagevorgang ohne Werkzeug und ohne nachträgliche Klebevorgänge o.dgl. miteinander verbinden lassen.

Aus dem Vorstehenden wird deutlich, dass bei der Ausbildung der Strömungsquerschnitte innerhalb der Fussaustrittsdüse 18, die ohnehin als selbständiges Bauteil hergestellt wird, keinerlei Rücksicht mehr auf die Ausbildung der Strömungswege innerhalb des Gehäuses 11 und innerhalb der Anschlusswände 24 genommen werden muss. Die Fussausströmdüse 18 ist daher im vorliegenden Ausführungsbeispiel mit einer nach innen gewölbten Unterseite 18a versehen, so dass im Inneren ein Strömungsquerschnitt entsteht, der im Bereich der Trennwand 30, d.h. im Bereich auch der Trennebene 21, den geringsten Querschnitt aufweist und zu den Auslassöffnungen 20 grösser wird. Es hat sich gezeigt, dass sich dadurch besonders günstige Ausströmverhältnisse an den Öffnungen 20, 20a oder 20b einstellen, die eine gleichmässige und angenehme Luftverteilung im Fussraum ermöglichen. Vorteilhaft ist auch, dass die Bauhöhe des gesamten Gehäuses 1 mit der angesetzten Fussausströmdüse 18 im Bereich der Trennebene 21 kleiner ist als im Aussenbereich, so dass sich die gezeigte Ausführungsform besonders für Fahrzeugtypen eignet, die einen Wellentunnel in der Längsmittelebene aufweisen. Dazu kommt, dass durch die neue Ausgestaltung weitgehend Freiheit in der Anordnung der Luftausströmöffnungen am Ende der quer liegenden Fussbodenausströmdüse 18 besteht und das Ausführungsbeispiel zeigt, dass an diesem Ende mehrere Austrittsöffnungen vorgesehen sind, die zum Teil nach der Stirnseite (20a), zum Teil nach vorne (20), nach hinten (20b), aber auch nach unten (20c) gerichtet sind. Vorteilhaft ist auch, dass durch die neue Ausgestaltung die Öffnung 20a nach oben durch die Wand 24 des Gehäuses 11 abgeschlossen wird, das in diesem Bereich damit sowohl als Anschlag für die Lagefixierung der Ausströmdüse 18 als auch als Begrenzung für die Luftaustrittsöffnung dient.

Wie aus Fig. 6 auch zu erkennen ist, kann die Eintrittsöffnung mindestens einer der Einführnuten mit einem sich trichterartig erweiternden Anschlussteil 28″ versehen sein, das es in besonders einfacher Weise ermöglicht, die entsprechende Einschubleiste 27 einzuführen. Wie ausserdem aus den Figuren zu erkennen ist, sind die Nuten 28, 28′ jeweils dadurch gebildet, dass seitlich von dem eigentlichen Gehäuseteil 18 abstehende Stege mit hochstehenden Aussenrändern über eine bestimmte Länge vorgesehen sind, die sich mit Wandteilen 34 und mit über die Nut 28 greifenden Stegteilen 34′ über die Länge der Nut 28 abwechseln. In analoger Weise ist die auf der höher gelegenen Seite des Teiles 18 vorgesehene Nut 28′ ausgebildet. Die Nuten 28 und 28′ können, um eine bessere Führung und Stabilität zu gewährleisten, auch durchgehend ausgebildet sein.

Im Bereich der Ausströmöffnungen 20, 20a, 20b, 20c können ausserdem, wie dargestellt, auch noch in der Einschubrichtung 32 verlaufende Teiltrennwände 35 vorgesehen werden, die dazu dienen, die Luftverteilung durch die Ausströmöffnungen zu dosieren. Auch solche Ausgestaltungen sind durch die Trennung des Ausströmdüsenteiles 18 vom übrigen Gehäuse möglich, so dass die neue Ausgestaltung weitgehend Freiheit in der Gestaltung der Form, der Luftführung zu diesen Austrittsöffnungen und hinsichtlich der Grösse und Anzahl der Austrittsöffnungen lässt, ohne dass Schwierigkeiten bei der Herstellung des Gehäuses oder bei dessen Montage zu erwarten sind.

## Patentansprüche

1. Gehäuse (11) für eine Heizungs- oder Klimaanlage für Kraftfahrzeuge, das im Fussbereich unterhalb der Windschutzscheibe (1) in Fahrzeugmitte angeordnet ist und mit steuerbaren Auslässen für die Verteilung von Frisch- oder Heizungsluft zu den im Bereich der Windschutzscheibe (1) bzw. im Fussbereich angeordneten Ausströmdüsen versehen ist, aus zwei an einer in Fahrzeuglängsrichtung verlaufenden Trennebene (21) zusammengefügten Gehäuseteilen (11a, 11b) besteht und mit einer quer zur Trennebene (21) verlaufenden Fussauslassdüse (18) versehen ist, die als getrenntes Teil an dem Gehäuse (11) angebracht ist, dadurch gekennzeichnet, dass die Fussauslassdüse (18) als ein einziges sich über beide Gehäuseteile (11a, 11b) erstreckendes Bauteil ausgebildet ist und von der Trennebene (21) her jeweils formschlüssig auf Anschlussführungen (27) der in der Trennebene (21) untereinander einrastbaren Gehäuseteile (11a, 11b) aufgeschoben ist.

2. Gehäuse nach Anspruch 1, dadurch gekennzeichnet, dass die Anschlussführungen (27, 28) senkrecht zur Trennebene (21) verlaufen.

3. Gehäuse nach den Ansprüchen 1 und 2, dadurch gekennzeichnet, dass an dem von der Trennebene (21) abgewandten Ende der Gehäuseteile (11a, 11b) und der Fussauslassdüse (18) Anschlagteile (31, 29) zur Lagefixierung der Fussausströmdüse vorgesehen sind.

4. Gehäuse nach den Ansprüchen 1 bis 3, dadurch gekennzeichnet, dass die Anschlussführungen als etwa parallel zueinander verlaufende Einschubleisten (27) am unteren Ende von Anschlusswänden (24) der Gehäuseteile (11a, 11b) und als Einschubnuten (28) an der Oberkante der Fussauslassdüse (18) ausgebildet sind.

5. Gehäuse nach Anspruch 4, dadurch gekennzeichnet, dass die Einschubleisten (27) sich zur Trennebene (21) leicht konisch verjüngen.

6. Gehäuse nach einem der Ansprüche 1 bis 5, dadurch gekennzeichnet, dass die Einschubnut (28) an der Fussauslassdüse (18) mit einer trichterförmigen Erweiterung (28') an dem von der Trennebene (21) abgewandten offenen Ende der Nut (28) versehen ist.

7. Gehäuse nach den Ansprüchen 1 bis 3, dadurch gekennzeichnet, dass neben den offenen und von der Trennebene (21) abgewandten Enden (28') der Einschubnut (28) ein der Form der Abschlusswand (31) der Fussauslassdüse (18) angepassten Anschlagrand (29) vorgesehen ist.

8. Gehäuse nach einem der Ansprüche 1 bis 7, dadurch gekennzeichnet, dass die Fussauslassdüse (18) eine nach innen gewölbte Unterseite (18a) besitzt.

9. Gehäuse nach einem der Ansprüche 1 bis 7 und nach Anpruch 8, dadurch gekennzeichnet, dass der Querschnitt des Innenraumes der Fussauslassdüse (18) nach den beiden Aussenenden hin zunehmend ausgebildet ist.

10. Gehäuse nach einem der Ansprüche 1 bis 9, dadurch gekennzeichnet, dass an den beiden Stirnenden der Fussauslassdüse Ausströmöffnungen (20, 20a, 20b, 20c) vorgesehen sind, die nach allen Richtungen weisen.

11. Gehäuse nach Anspruch 10, dadurch gekennzeichnet, dass im Bereich der Ausströmöffnungen (20, 20a, 20b, 20c) Strömungsleitwände (35) vorgesehen sind.

12. Gehäuse nach einem der Ansprüche 1 bis 11, dadurch gekennzeichnet, dass sowohl die beiden Gehäuseteile (11a und 11b) als auch die daran ansetzbare Ausströmdüse (18) aus einem Kunststoffmaterial hergestellt sind.

## Claims

1. A housing (11) for a heating or air conditioning plant for motor vehicles, disposed in the foot area below the windscreen (1) and in the centre of the vehicle and provided with controllable outlets for the distribution of fresh or heating air to the exit jets disposed in the region of the windscreen (1) and/or in the foot area, consists of two housing parts (11a, 11b) joined together in a plane (21) of separation extending in the longitudinal direction of the vehicle and provided with a foot outlet jet (18) extending transversely of the plane (21) of separation which is provided on the housing (11) as a separate part, characterized in that the foot outlet jet (18) is constructed as a single component part extending over both housing parts (11a, 11b) and is pushed from the plane (21) of separation in form-locking manner onto connecting guides (27) of the housing parts (11a, 11b) adapted to be inter-engaged with each other in the plane (21) of separation.

2. Housing according to Claim 1, characterized in that the connecting guides (27, 28) extend at a right angle to the plane (21) of separation.

3. Housing according to Claims 1 and 2, characterized in that at the end of the housing parts (11a, 11b) which is remote from the plane (21) of separation and the foot outlet jet (18), abutment parts (31, 29) are provided to establish the location of the foot outlet jet (18).

4. Housing according to Claims 1 to 3, characterized in that the connecting guides are constructed as push-in strips (27) which extend substantially parallel with each other at the bottom end of the connecting walls (24) of the housing parts (11a, 11b) and as push-in slots (28) on the top edge of the foot outlet jet (18).

5. Housing according to Claim 4, characterized in that the push-in strips (27) taper slightly in conical fashion towards the plane (21) of separation.

6. Housing according to one of Claims 1 to 5, characterized in that the push-in slot (28) on the foot outlet jet (18) is provided with a funnel-shaped widening-out portion (28') at the open end of the slot (28) which is remote from the plane (21) of separation.

7. Housing according to Claims 1 to 3, characterized in that in addition to the open ends (28') of the push-in slot (28) which is remote from the plane (21) of separation an abutment edge (29) is provided which is adapted to the shape of the end wall (31) of the foot outlet jet (18).

8. Housing according to one of Claims 1 to 7, characterized in that the foot outlet jet (18) has an inwardly concave underside (18a).

9. Housing according to one of Claims 1 to 7 and according to Claim 8, characterized in that the cross-section of the interior space in the foot outlet jet (18) is constructed to increase towards the two outer ends.

10. Housing according to one of Claims 1 to 9, characterized in that there are at the two ends of the foot outlet jet exit orifices (20, 20a, 20b, 20c) which point in all directions.

11. Housing according to Claim 10, characterized in that flow guide walls (35) are provided in the region of the exit orifices (20, 20a, 20b, 20c).

12. Housing according to one of Claims 1 to 11, characterized in that both the two housing parts (11a, 11b) and also the exit jet (18) which can be mounted thereon are produced from a synthetic plastics material.

## Revendications

1. Boîtier (11) pour installation de chauffage ou de climatisation de véhicules à moteur, qui est disposé dans l'espace pour les pieds en dessous du pare-brise (1), au milieu du véhicule, qui est doté d'orifices d'échappement réglables destinés à distribuer de l'air frais ou de l'air de chauffage aux diffuseurs disposés au niveau du pare-brise (1) ou dans l'espace pour les pieds, qui est constitué de deux parties de boîtier (11a, 11b) assemblées dans un plan de joint (21) s'étendant dans le sens longitudinal du véhicule, et qui est muni d'un diffuseur aux pieds (18) s'étendant perpendiculairement au plan de joint (21), diffuseur qui est constitué d'une pièce séparée montée sur le boîtier (11), caractérisé en ce que le diffuseur aux pieds (18) est réalisé sous la forme d'un seul élément de construction s'étendant sur les deux parties de boîtier (11a, 11b) et qui, en partant du plan de joint (21), est enfilé en assemblage mécanique sur des guidages de raccordement (27) prévus sur les parties de boîtier (11a, 11b) enclenchables l'une sous l'autre dans le plan de joint (21).

2. Boîtier selon la revendication 1, caractérisé en ce que les guidages de raccordement (27, 28) s'étendent perpendiculairement au plan de joint (21).

3. Boîtier selon les revendications 1 et 2, caractérisé en ce qu'il est prévu, sur l'extrémité opposée au plan de joint (21) des parties de boîtier (11a, 11b) et du diffuseur aux pieds (18), des parties de butée (31, 29) destinées à fixer la position du diffuseur aux pieds.

4. Boîtier selon l'une quelconque des revendications 1 à 3, caractérisé en ce que les guidages de raccordement sont réalisés sous forme de glissières embrochables (27) s'étendant approximativement parallèlement l'une à l'autre prévues sur l'extrémité inférieure de parois de raccordement (24) des parties de boîtier (11a, 11b), et d'encoches embrochables (28) prévues sur le bord supérieur du diffuseur aux pieds (18).

5. Boîtier selon la revendication 4, caractérisé en ce que les glissières embrochables (27) se rétrécissent légèrement en forme de cône vers le plan de joint (21).

6. Boîtier selon l'une quelconque des revendications 1 à 5, caractérisé en ce que l'encoche embrochable (28) prévue sur le diffuseur aux pieds (18) est munie à son extrémité ouverte opposée au plan de joint (21) d'un élargissement (28') en forme d'entonnoir.

7. Boîtier selon l'une quelconque des revendications 1 à 3, caractérisé en ce qu'il est prévu, à côté des extrémités (28') ouvertes et opposées au plan de joint (21) de l'encoche embrochable (28), un bord de butée (29) adapté à la forme de la paroi terminale (31) du diffuseur aux pieds (18).

8. Boîtier selon l'une quelconque des revendications 1 à 7, caractérisé en ce que le diffuseur aux pieds (18) possède une face inférieure (18a) bombée vers l'intérieur.

9. Boîtier selon l'une quelconque des revendications 1 à 7 et selon la revendication 8, caractérisé en ce que la section de l'espace intérieur du diffuseur aux pieds (18) augmente en direction des deux extrémités externes du diffuseur aux pieds (18).

10. Boîtier selon l'une quelconque des revendications 1 à 9, caractérisé en ce qu'il est prévu, sur les deux extrémités frontales du diffuseur aux pieds, des orifices d'écoulement (20, 20a, 20b, 20c) qui sont orientés dans toutes les directions.

11. Boîtier selon la revendication 10, caractérisé en ce qu'il est prévu au niveau des orifices d'écoulement (20, 20a, 20b, 20c) des parois déflectrices (35).

12. Boîtier selon l'une quelconque des revendications 1 à 11, caractérisé en ce que tant les deux parties de boîtier (11a et 11b) que le diffuseur (18) rapporté sur ces parties de boîtier sont réalisés en un matériau plastique.

Fig. 1

Fig. 2

0 089 500

Fig. 3

# Fig. 4

0 089 500

# Fig. 6

20a  31
31
20
28'
28
18
34'  34
VIII
30
28
28"
20c
20
20b
31  35  28'
20a
31

VII

# Fig. 8

20b
20
18a
30
18
20b
35

Fig. 5

Fig. 7